# EUROPEAN PATENT SPECIFICATION

(11) **EP 3 356 068 B1**
(45) Date of publication and mention of the grant of the patent: **17.02.2021**
(21) Application number: 16756824.5
(22) Date of filing: 25.07.2016
(51) Int. Cl.: B22F 3/105

(54) **SYSTEM AND METHOD FOR ADDITIVE MANUFACTURING PROCESS CONTROL**
SYSTEM UND VERFAHREN ZUR STEUERUNG EINES PROZESSES ZUR GENERATIVEN FERTIGUNG
SYSTÈME ET PROCÉDÉ DE COMMANDE DE PROCESSUS DE FABRICATION ADDITIVE

(30) Priority: 30.09.2015 US 201514871120
(43) Date of publication of application: 08.08.2018
(73) Proprietor: General Electric Company, Schenectady, NY 12345 (US)
(72) Inventor: BEACHAM JR., Jimmie Autrey, Waukesha, Wisconsin 53188 (US); ABITZ, Steven Adam, Waukesha, Wisconsin 53188 (US)
(74) Representative: Hafner & Kohl PartmbB
(86) International application number: PCT/US2016/043830
(87) International publication number: WO 2017/058346

(56) References cited:
- DR. KAMRAN AAMIR MUMTAZ ET AL: "SELECTIVE LASER MELTING OF INCONEL 625 USING PULSE SHAPING", RAPID PROTOTYPING JOURNAL, vol. 16, no. 4, 1 January 2010 (2010-01-01), pages 248-257, XP055158649, ISSN: 1355-2546, DOI: 10.1108/13552541080000463
- A R Nassar ET AL: "Process monitoring of directed-energy deposition of Inconel-718 via plume imaging", 2015 Annual International Solid Freeform Fabrication Symposium, Austin, TX, 12 August 2015 (2015-08-12), XP055312439, Retrieved from the Internet: URL:http://sffsymposium.engr.utexas.edu/si tes/default/files/2015/2015-23-Nassar.pdf [retrieved on 2016-10-19]
- Mahesh Mani ET AL: "Measurement Science Needs for Real-time Control of Additive Manufacturing Powder Bed Fusion Processes", , 12 August 2015 (2015-08-12), XP055312413, DOI: 10.6028/NIST.IR.8036 Retrieved from the Internet: URL:http://www.come3d.com/ueditor/php/uplo ad/file/20150416/1429164193510688.pdf [retrieved on 2016-10-19]

## Description

### BACKGROUND

### TECHNICAL FIELD

Embodiments of the invention relate generally to additive manufacturing and, more specifically, to a system and method for real-time statistical process control for an additive manufacturing device.

### DISCUSSION OF ART

Selective Laser Sintering (SLS) is an additive manufacturing technique that uses a laser as the power source to sinter powdered material, typically metal. SLS generally entails automatically aiming a laser at points in space defined by a 3D model and binding the material together to create a solid structure. In particular, SLS involves the use of a high power laser, e.g., a carbon dioxide laser, to fuse small particles of plastic, metal, ceramic or glass powders into a mass that has a desired three-dimensional shape. The laser selectively fuses powdered material by scanning cross-sections generated from a 3D digital description of the part, obtained from a CAD file, scan data or the like, on the surface of a powder bed. After each cross-section is scanned, the powder bed is lowered by one layer thickness and a new layer of material is applied on top. The process is then repeated until the part is completed.

Existing SLS systems are open loop designs, with no direct feedback for any in-process quality factors such as powder recoating, re-coater shape, powder uniformity, laser welding uniformity and table Z-height position accuracy. In many existing systems, parts may be created in 10-20 micron layers, meaning that some parts may take several days to generate. If a defect is created anywhere within this multi-day cycle time, the part may have to be discarded. As will be appreciated, the lack of adequate quality control and feedback can result in the wasting of machine capacity, especially where a defect is created early in the process but not identified until days later when manufacturing is complete, resulting in low yield. The potential for such low yields have prevented the use of SLS in many applications.

In view of the above, there is a need for a system and method for real-time statistical process control monitoring and control for an additive manufacturing device that enables potential defects to be detected at an early stage.

Dr. Kamran Aamir Mumtaz ET AL: "Selective Laser Melting of Inconel 625 Using Pulse Shaping", Rapid Prototyping Journal, vol. 16, no. 4, 1 January 2010 (2010-01-01), pages 248-257, XP055158649, ISSN: 1355-2546, DOI: 10.1108/13552541080000463 discloses a system with pulsed laser used to melt layers of Inconel 625 from a powder bed.

### BRIEF DESCRIPTION

The invention is provided in method claim 1 and the subject-matter of claim 7.

In an embodiment, a method of process control for an additive manufacturing system is provided. The method includes the steps of monitoring a spark plume created during manufacturing of an article, capturing at least one image of the spark plume, deriving image data from the at least one image, feeding the image data into a statistical process control module, and generating an alert if the image data exceeds pre-determined control limits.

In another embodiment, an additive manufacturing system is provided. The system includes a process chamber having a ground surface, a build-up chamber having a lift table positioned therein, the lift table being movable upward and downward within the build-up chamber, a leveling device configured to distribute powder material across the ground surface of the process chamber, including across the lift table, a laser source configured to direct a laser beam towards the lift table, a control unit configured to control the laser source and laser beam in response to input article data to weld a portion of the powder material on the lift table, and a camera configured to capture images of a spark plume created during welding.

In yet another embodiment, a quality control method for an additive manufacturing system is provided. The method includes the steps of distributing a powder material across a build surface, in response to input article data, directing a laser beam to the build surface to sinter a portion of the powder material, monitoring a spark plume created during sintering, capturing image data from the spark plume and comparing the image data to pre-set control limits.

### DRAWINGS

The present invention will be better understood from reading the following description of non-limiting embodiments, with reference to the attached drawings, wherein below:
FIG. 1 is a schematic illustration of a selective laser sintering system according to an embodiment of the invention.
FIG. 2 is a detail view of a spark plume produced during welding using the laser sintering system.
FIG. 3 is a flow diagram illustrating a quality control method for an additive manufacturing system, according to an embodiment of the invention.

### DETAILED DESCRIPTION

Reference will be made below in detail to exemplary embodiments of the invention, examples of which are illustrated in the accompanying drawings. Wherever possible, the same reference characters used throughout the drawings refer to the same or like parts, without duplicative description. Although exemplary embodiments of the present invention are described with respect to SLS, embodiments of the invention are also applicable to sintering in general and to additive manufacturing processes and systems. Moreover, embodiments of the invention are not limited to industrial applications and may be generally useful for 3D printing. In addition to SLS, particular embodiments may be suitable for use with Selective Laser Melting (SLM), Direct Metal Laser Melt (DMLM) and Direct Metal Laser Sintering (DMLS) additive techniques.

As used herein, the terms "substantially," "generally," and "about" indicate conditions within reasonably achievable manufacturing and assembly tolerances, relative to ideal desired conditions suitable for achieving the functional purpose of an article or assembly. As used herein, "electrically coupled, "electrically connected" and "electrical communication" means that the referenced elements are directly or indirectly connected such that an electrical current may flow from one to the other. The connection may include a direct conductive connection (i.e., without an intervening capacitive, inductive or active element), an inductive connection, a capacitive connection, and/or any other suitable electrical connection. Intervening components may be present.

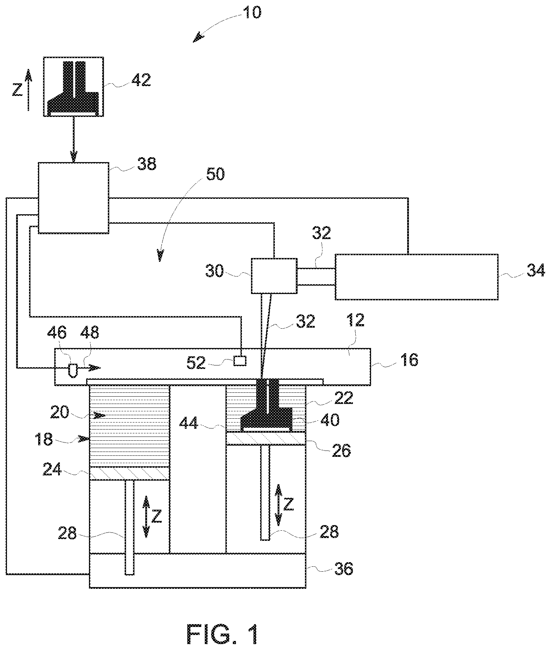

With reference to FIG. 1 an additive manufacturing system 10 according to an embodiment of the present invention is illustrated. In an embodiment, the additive manufacturing system 10 may be an SLS additive manufacturing system of the type known in the art. For example, the additive manufacturing system may include a process chamber 12 within which is a ground surface 16. Assigned to the ground surface 16 of the process chamber 12 is on the one hand a storage chamber 18, filled with metallic material in powder form 20, and on the other hand a build-up chamber 22. A lift table 24, 26 is located in each chamber 18, 22, where the lift tables can each be moved via a lift piston 28 in the z-direction indicated by the direction of the double arrows. Located above the process chamber 12, in the area of the build-up chamber 22, is a scanning device 30 that directs a laser beam 32, generated by a laser 34, to the lift table 26. The laser 34, the scanning device 30, as well as a drive mechanism 36 for the two lift pistons 28 are electrically connected to a central processing and control unit 38 via control leads that are not provided with reference numbers. Alternatively, the laser, 34, scanning device 30 and drive mechanism 36 may be in communication with the processing unit 38 via wireless or other means known in the art.

To manufacture a part or component, for example, article 40, the article coordinates are first entered three-dimensionally, that is, in individual z-direction divided cuts, into the processing unit 38 via an input unit 42. In an embodiment, the input unit 42 may be a computer terminal. In an embodiment, the cuts go through article 40 in z-direction at distances of 0.1 mm such that, for example, 1000 cuts result for an article with a structural height in z-direction of 10 cm. After the input article data are adequately processed by the central processing unit 38, the lift table 26 in the build-up chamber 22 is moved to the first, upper position, such that the support surface 44 of the lift table 26 is substantially planar with the ground surface 16. The lift table 24 of the storage chamber 18 moves to the lower position, for example, to a position as shown in FIG. 1, and fine grain powder 20 of the kind of metal that the article 40 shall be manufactured from is filled into the storage chamber 18.

In an embodiment, the grain of the powder 20 is in a range between 10 and 100 pm, with the actual grain size being dependent on the article specifications. Powders having different specifications may also be utilized without departing from the broader aspects of the present invention.

Using a leveling device 46, indicated in FIG. 1 schematically by an arrow, the metallic powder material 20, which is lifted above the ground level 16 using the lift table 24, is distributed across the ground surface 16 of the process chamber 12 by moving this leveling device 46 in the direction of the arrow 48 to distribute a thin layer of metallic powder material, as can be seen above the ground surface 16. The leveling device 46, which is also connected to the central processing unit 38, is lifted up to a distance above the ground surface 16 that corresponds to a layer of the article 40 that is to be built up. As can be seen, a thin powder coating is then also applied above the lift table 26. When this preparative measure is finished, the laser 34 and the scanning device 30 are activated to direct the laser beam 32 to the support surface 44, or to the metallic powder material 20 positioned on the support surface 44 to melt, according to the coordinates, the powder that corresponds to the lowest layer of the article. As is known in the art, for this purpose, the laser beam 32 is moved in x-direction along successive runs n to melt the metallic powder material 20.

Once the lowest layer of the article 40, is formed, the lift table 26 is moved down by a distance Δz, such that the upper surface of this first layer is again at about the level of the ground surface 16 of the processing chamber 12. Thereafter, the leveling device 46 is again actuated to apply a defined amount of powder layer onto the layer of the article 40 below. Then, the laser beam 32 is again guided across the powder run by run according to the article coordinates in order to melt the powder 20. Not only the metallic powder material will be molten, but also the surface of the layer below as well, as each neighboring run n, that is, the laser beam that moves along run n+1 sweeps also across run n. At this, the laser beam 32 should sweep with at least one third of its diameter across the previous run n in order to melt the hardened metal of the neighboring run. In doing so, part of run n is melted as well as the layer below, such that a molten area is formed underneath the laser beam 32. Then, the molten powder 20 hardens, together with the metal in the previous run n to a homogeneous layer. This process is repeated until the entire article 40 is built.

As alluded to above, additive manufacturing, particularly additive manufacturing utilizing selective laser sintering, is a time consuming process which may require days to complete a single part or article. If a part is produced with a defect, the part will often times be discarded. In many situations, defects may be created early on in the manufacturing process, but because such existing systems employ only open-loop control of the manufacturing process, such defects are typically not identified until the part is complete. Accordingly, the time on the machine between creation of the defect and completion of the part is wasted should the part have to be discarded because of the defect; time that could have better been used to start the manufacturing process over again with a new part. Such open loop control used in existing selective laser sintering systems contributes to low yield and limits the applications for which selective laser sintering is utilized.

In an effort to alleviate these issues, embodiments of the additive manufacturing system 10 of the present invention employ a closed loop feedback system 50 having a high speed, high resolution camera 52 focused on the support surface 44 of the lift table 26. The camera 52 is electrically connected to the processing and control unit 38 and is configured to monitor the real-time spark plume that is created when the laser beam 32 welds powder 20 to the previous layer of the article 40. As used herein, "real-time" means the actual time during which something takes place, e.g., the camera 52 monitors and records the spark plume during the time it is created, during the welding process. While the camera 52 is illustrated as being internal to the process chamber 12, in other embodiments the camera may be located outside the process chamber. In an embodiment, the high-speed, high-resolution camera 52 provides a minimum of 1080p resolution (a minimum of 600 frames/second). In an embodiment, the camera 52 has a sampling rate, or the equivalent, of greater than 600 frames per second. The camera 52 may have a dynamic range focal length configured to cover a minimum area of 280mm x 280mm so that the spark plume is always measurable.

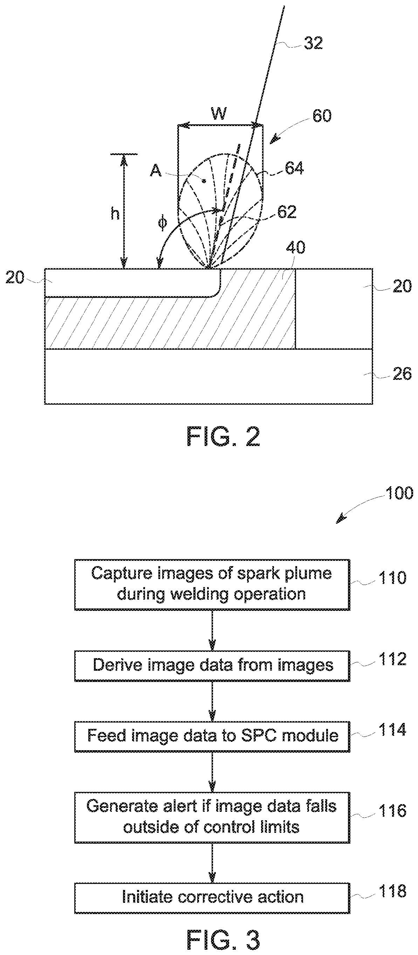

The plume is created by the rapid expansion of gas when the welding process takes place. The plume is an indicator of several in-process quality factors such as powder recoating, re-coater shape, powder uniformity, laser welding uniformity and lift table height position accuracy. FIG. 2 is a detail view of a spark plume 60 created when the laser 32 welds the powder material 20, where reference numeral 62 denotes a spark path and line 64 denotes the end of the visible spark. As shown therein, the spark plume 60 includes a width *w*, a height *h*, an area *A*, and an angle φ. By monitoring the spark plume in real-time using the camera 52, plume shape, height, width, area, orientation and light intensity can be diagnosed and analyzed. In particular, image data captured by the camera 52 can be fed into statistical process control models stored in the processing and control unit 38 to alert process engineers when something is abnormal so that an action may be taken. In an embodiment, the action may be a corrective action to correct the source of the issue so that manufacturing of the article may continue. In other embodiments, the action may be to stop the cycle so that the article may be removed and a new cycle initiated.

In an embodiment, the statistical process control module includes software configured to derive image data from the video feed captured by the camera. In particular, the software is configured to calculate the parameters of, for example, size, angle width, volume and height of the spark plume 60 from the video feed. Moreover, the software is configured to compare the raw image data to specifications that a user may input into the system and has the ability to export the data in real time in a general format that a standard SPC package can handle.

For example, with reference to FIG. 3, a method 100 for statistical process control for an additive manufacturing device may include manufacturing an article in accordance with the process described above. At step 110, images of the spark plume created during the welding process may be captured by camera 52 in real-time. In an embodiment, the images may be captured periodically, at pre-set intervals. The captured images may be fed back to the processing and control unit 38 where image data is derived from the images, at step 112. In an embodiment, the image data may include various plume characteristics such as plume shape, plume height, width, area, orientation and light intensity. At step 114, the image data is fed into a statistical process control module and analyzed to determine if anything is abnormal. For example, in an embodiment, the image data may be plotted on one or more graphs with pre-determined control limits. In an embodiment, the control limits may be tailored to the specific powder material from which the article 40 is manufactured and/or the particular article manufactured. Other factors may define the pre-set control limits without departing from the broader aspects of the present invention.

Data that falls within the control limits indicates that everything is operating as expected. Any variation within the control limits is likely due to a common cause-the natural variation that is expected as part of the manufacturing process. If data falls outside of the control limits, this indicates that an assignable cause is likely the source of the product variation, and something within the process should be changed to fix the issue before defects occur.

At step 116, if it is determined that the captured image data of the spark plume falls outside of the control limits, an alert may be generated. The alert may take the form of an audible or other physical alarm, a visual alert or the like. In an embodiment, the processing and control unit 38 may remotely alert designated process engineers or technicians such as, for example, generating a text message, email or the like. In response to the alert, an operator or technician can assess whether or not the manufacturing cycle requires intervention and, if so, corrective action can be taken at step 118. As indicated above, the corrective action may include halting operation of the system 10 to calibrate, replace or adjust system components so that manufacturing on the same component may resume. In other embodiments, corrective action may include discarding the article and initiating a new manufacturing cycle.

The system and method of the present invention therefore provide for closed loop feedback of spark plume image data that can be utilized to identify abnormalities in system operation so that they may be addressed before defects occur, or at least before the entire manufacturing cycle is run. Accordingly, wasting of machine capacity due to simple manufacturing errors can be obviated. Moreover the statistical process control provided herein is able to capture trends in the manufacturing process so that the system can have predictive quality.

In addition to the above, the closed loop feedback provided by the present invention may enable more additive manufacturing applications where they may currently be cost prohibited because of low yields.

While the embodiments of the present invention described above refer to monitoring, visually, the spark plume created during welding as a form of quality control, the present invention is not so limited in this regard. In particular, it is contemplated that other sensor technologies may be utilized to provide closed loop control of the manufacturing process.

Moreover, while the embodiments of the invention described above disclose the use of a camera that is in fixed position, it is contemplated that the camera or sensing device (where other than visual characteristics are measured or sensed) may be movable so that it may be synced with the laser beam 32. In particular, in an embodiment, the camera may be configured to provide active tracking of the laser path in order to follow the spark plume. In other embodiments, the laser path may be programmed in the processing and control unit and fed to the camera so that a programmed path of the camera tracks the programmed path of the laser. By providing a dynamic camera, better focus on the plume may be accomplished, and artifacts may be eliminated or reduced.

In an embodiment, a method of process control for an additive manufacturing system is provided. The method includes the steps of monitoring a spark plume created during manufacture of an article, capturing at least one image of the spark plume, deriving image data from the at least one image, feeding the image data into a statistical process control module, and generating an alert if the image data exceeds pre-determined control limits. In an embodiment, the step of monitoring the spark plume occurs in real-time. In an embodiment, the image data includes at least one of plume shape, plume height, plume width, plume area, plume orientation and light intensity. In an embodiment, the method may also include the step of, in response to the alert, taking a corrective action. In an embodiment, the corrective action may include pausing operation of the system and calibrating, adjusting or replacing a component of the system, and resuming operation. In an embodiment, the corrective action includes removing the component from the system and initiating a new cycle. In an embodiment, the additive manufacturing system is a selective laser sintering additive manufacturing system. In an embodiment, the steps of monitoring the spark plume and capturing at least one image of the spark plume are carried out by a high speed, high resolution camera.

In an embodiment, an additive manufacturing system is provided. The system includes a process chamber having a ground surface, a build-up chamber having a lift table positioned therein, the lift table being movable upward and downward within the build-up chamber, a leveling device configured to distribute powder material across the ground surface of the process chamber, including across the lift table, a laser source configured to direct a laser beam towards the lift table, a control unit configured to control the laser source and laser beam in response to input article data to weld a portion of the powder material on the lift table, and a camera configured to capture images of a spark plume created during welding. In an embodiment, the control unit is configured to receive the images captured by the camera, derive image data from the images and analyze the image data. In an embodiment, analyzing the image data includes inputting the image data into a statistical process control module. In an embodiment, analyzing the image data includes comparing the image data to pre-determined control limits. In an embodiment, the control unit is configured to generate an alert if the image data exceeds the pre-determined control limits. In an embodiment, the image data includes at least one of plume shape, plume height, plume width, plume area, plume orientation and light intensity. In an embodiment, the camera is a high speed, high resolution camera. In an embodiment, the camera is configured to capture the images of the spark plume in real-time. In an embodiment, the powder material is a metal powder.

In an embodiment, a quality control method for an additive manufacturing system is provided. The method includes the steps of distributing a powder material across a build surface, in response to input article data, directing a laser beam to the build surface to sinter a portion of the powder material, monitoring a spark plume created during sintering, capturing image data from the spark plume and comparing the image data to pre-set control limits. In an embodiment, the step of capturing image data includes, with a camera, capturing at least one image of the spark plume, and deriving the image data from the at least one image. In an embodiment, the method may also include the steps of feeding the image data into a statistical process control module and generating an alert if the image data exceeds the pre-set control limits. In an embodiment, the image data includes at least one of plume shape, plume height, plume width, plume area, plume orientation and light intensity.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the invention without departing from its scope.

While the dimensions and types of materials described herein are intended to define the parameters of the invention, they are by no means limiting and are exemplary embodiments. Many other embodiments will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, terms such as "first," "second," "third," "upper," "lower," "bottom," "top," etc. are used merely as labels, and are not intended to impose numerical or positional requirements on their objects. Further, the limitations of the following claims are not written in means-plus-function format and are not intended to be interpreted based on 35 U.S.C. § 122, sixth paragraph, unless and until such claim limitations expressly use the phrase "means for" followed by a statement of function void of further structure.

This written description uses examples to disclose several embodiments of the invention, including the best mode, and also to enable one of ordinary skill in the art to practice the embodiments of invention, including making and using any devices or systems and performing any incorporated methods. The patentable scope of the invention is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

As used herein, an element or step recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising," "including," or "having" an element or a plurality of elements having a particular property may include additional such elements not having that property.

Since certain changes may be made in the above-described invention, without departing from the spirit and scope of the invention herein involved, it is intended that all of the subject matter of the above description or shown in the accompanying drawings shall be interpreted merely as examples illustrating the inventive concept herein and shall not be construed as limiting the invention.

## Claims

1. A method of process control for an additive manufacturing system, comprising the steps of:
monitoring a spark plume (60) created during manufacture of an article (40) in a system according to any of claims 7-9;
capturing at least one image of the spark plume (60);
deriving image data from the at least one image;
feeding the image data into a statistical process control module; and
generating an alert if the image data exceeds a pre-determined control limit.

2. The method according to claim 1, wherein:
the step of monitoring the spark plume (60) occurs in real-time.

3. The method according to claim 2, wherein:
the image data includes at least one of plume shape, plume height, plume width, plume area, plume orientation and light intensity.

4. The method according to claim 3, further comprising the step of:
in response to the alert, taking a corrective action, said corrective action in particular including
pausing operation of the system and calibrating, adjusting or replacing a component of the system, and resuming operation; or
removing the article (40) from the system and initiating a new manufacturing cycle.

5. The method according to claim 1, wherein:
the additive manufacturing system is a selective laser sintering additive manufacturing system.

6. The method according to claim 1, wherein:
the steps of monitoring the spark plume (60) and capturing at least one image of the spark plume (60) are carried out by a high speed, high resolution camera (52)ca.

7. An additive manufacturing system, comprising:
a process chamber (12) having a ground surface (16);
a build-up chamber (22) having a lift table (26) positioned therein, the lift table (26) being movable upward and downward within the build-up chamber (22);
a leveling device (46) configured to distribute powder material (20), in particular metal powder, across the ground surface (16) of the process chamber (12), including across the lift table (26);
a laser source configured to direct a laser beam towards the lift table (26);
a camera (52) configured to capture images of a spark plume (60) created during welding;
a control unit (38) configured to control the laser source and laser beam (32) in response to input article data to weld a portion of the powder material (20) on the lift table (26) configured to receive the images captured by the camera (52), derive image data from the images and analyze the image data;
wherein:
analyzing the image data includes inputting the image data into a statistical process control module and comparing the image data to pre-determined control limits wherein
the control unit (38) is configured to generate an alert if the image data exceeds the pre-determined control limits.

8. The additive manufacturing system of claim 7, wherein:
the image data includes at least one of plume shape, plume height, plume width, plume area, plume orientation and light intensity.

9. The additive manufacturing system of claim 7, wherein:
the camera (52) is a high speed, high resolution camera, in particular is configured to capture the images of the spark plume (60) in real-time.

## Patentansprüche

1. Methode zur Prozesssteuerung für ein additives Herstellungssystem, umfassend die folgenden Schritte:
Erfassen einer Funkenflugwolke (60), die während der Herstellung eines Werkstücks (40) in einem System gemäß einem der Ansprüche 7-9 erzeugt wird;
Erfassen mindestens eines Bildes der Funkenflugwolke (60);
Ableiten von Bilddaten aus dem mindestens einen Bild;
Einspeisen der Bilddaten in ein statistisches Prozesskontrollmodul; und
Ausgeben eines Alarms, wenn die Bilddaten eine vorbestimmte Kontrollgrenze überschreiten.

2. Methode gemäß Anspruch 1, worin:
der Schritt der Überwachung der Funkenflugwolke (60) in Echtzeit erfolgt.

3. Methode gemäß Anspruch 2, worin:
die Bilddaten mindestens eines der folgenden Elemente enthalten: Wolkenform, Wolkenhöhe, Wolkenbreite, Wolkenfläche, Wolkenorientierung und Lichtintensität.

4. Methode gemäß Anspruch 3, ferner umfassend den Schritt:
Ergreifen einer Korrekturmaßnahme als Reaktion auf den Alarm, wobei die Korrekturmaßnahme insbesondere Folgendes enthält
Anhalten des Betriebs des Systems und Kalibrieren, Einstellen oder Ersetzen einer Systemkomponente und Wiederaufnahme des Betriebs; oder
Entfernen des Werkstücks (40) aus dem System und Einleiten eines neuen Herstellungszyklus.

5. Methode gemäß Anspruch 1, worin:
es sich bei dem additiven Herstellungssystem um ein System zur additiven Herstellung durch selektives Lasersintern handelt.

6. Methode gemäß Anspruch 1, worin:
die Schritte des Erfassens der Funkenflugwolke (60) und des Erfassens mindestens eines Bildes der Funkenflugwolke (60) von einer Hochgeschwindigkeits- und hochauflösenden Kamera (52) durchgeführt werden.

7. Additives Herstellungssystem, umfassend:
eine Prozesskammer (12) mit einer Grundfläche (16)
eine Aufbaukammer (22) mit einem darin angeordneten Hebetisch (26), wobei der Hebetisch (26) innerhalb der Aufbaukammer (22) aufwärts und abwärts bewegbar ist;
eine Ausrichtvorrichtung (46), die so konfiguriert ist, dass sie Pulvermaterial (20), insbesondere Metallpulver, über die Grundfläche (16) der Prozesskammer (12) verteilt, einschließlich über den Hebetisch (26);
eine Laserquelle, die so konfiguriert ist, dass sie einen Laserstrahl auf den Hebetisch (26) richtet
eine Kamera (52), die so konfiguriert ist, dass sie Bilder einer während des Sinterns erzeugten Funkenflugwolke (60) erfasst;
eine Steuerungseinheit (38), die so konfiguriert ist, dass sie die Laserquelle und den Laserstrahl (32) in Reaktion auf eingegebene Werkstückdaten steuert, um einen Teil des Pulvermaterials (20) auf dem Hebetisch (26) zu sintern, der so konfiguriert ist, dass er die von der Kamera (52) aufgenommenen Bilder empfängt, Bilddaten aus den Bildern ableitet und die Bilddaten analysiert;
worin:
das Analysieren der Bilddaten das Eingeben der Bilddaten in ein statistisches Prozesskontrollmodul und das Vergleichen der Bilddaten mit vorbestimmten Kontrollgrenzen einschließt, worin
die Steuerungseinheit (38) so konfiguriert ist, dass sie einen Alarm ausgibt, wenn die Bilddaten die vorbestimmten Kontrollgrenzen überschreiten.

8. Additives Herstellungssystem nach Anspruch 7, worin:
die Bilddaten mindestens eines der folgenden Elemente enthalten: Wolkenform, Wolkenhöhe, Wolkenbreite, Wolkenfläche, Wolkenorientierung und Lichtintensität.

9. Additives Herstellungssystem nach Anspruch 7, worin:
die Kamera (52) eine Hochgeschwindigkeits- und hochauflösende Kamera ist, die insbesondere so konfiguriert ist, dass sie die Bilder der Funkenflugwolke (60) in Echtzeit erfasst.

## Revendications

1. Procédé de contrôle de processus pour un système de fabrication d'additif, comprenant les étapes consistant à :
contrôler un panache d'étincelle (60) créé pendant la fabrication d'un article (40) dans un système selon l'une des revendications 7 à 9 ;
saisir au moins une image du panache d'étincelle (60) ;
tirer des données d'image de la au moins une image ;
alimenter les données d'image dans un module de contrôle de processus statistique ; et
générer une alerte si les données d'image dépassent une limite de contrôle prédéterminée.

2. Procédé selon la revendication 1, dans lequel :
l'étape de contrôle du panache d'étincelle (60) survient en temps réel.

3. Procédé selon la revendication 2, dans lequel :
les données d'image comprennent au moins l'un d'une forme de panache, d'une hauteur de panache, d'une largeur de panache, d'une surface de panache, d'une orientation de panache et d'une intensité lumineuse.

4. Procédé selon la revendication 3, comprenant en outre l'étape de :
en réponse à l'alerte, prendre une action corrective, ladite action corrective comprenant en particulier
la mise en pause du fonctionnement du système et l'étalonnage, l'ajustement ou le remplacement d'un composant du système, et la reprise du fonctionnement ; ou
le retrait de l'article (40) du système et le lancement d'un nouveau cycle de fabrication.

5. Procédé selon la revendication 1, dans lequel :
le système de fabrication d'additif est un système de fabrication d'additif à frittage sélectif par laser.

6. Procédé selon la revendication 1, dans lequel :
les étapes de contrôle du panache d'étincelle (60) et la saisie d'au moins une image du panache d'étincelle (60) sont réalisées par une caméra (52) à grande vitesse et haute résolution.

7. Système de fabrication d'additif, comprenant :
une chambre de traitement (12) comportant une surface rectifiée (16) ;
une chambre d'accumulation (22) comportant une table élévatrice (26) positionnée à l'intérieur, la table élévatrice (26) étant mobile vers le haut et vers le bas à l'intérieur de la chambre d'accumulation (22) ;
un dispositif de nivellement (46) configuré pour distribuer une matière en poudre (20), en particulier une poudre métallique, sur la surface rectifiée (16) de la chambre de traitement (12), y compris sur la table élévatrice (26) ;
une source laser configurée pour diriger un faisceau laser vers la table élévatrice (26) ;
une caméra (52) configurée pour saisir des images d'un panache d'étincelle (60) créé pendant le soudage ;
une unité de commande (38) configurée pour contrôler la source laser et le faisceau laser (32) en réponse à des données d'article d'entrée pour souder une partie de la matière en poudre (20) sur la table élévatrice (26) configurée pour recevoir les images saisies par la caméra (52), tirer les données d'image des images et analyser les données d'image ;
dans lequel :
l'analyse des données d'image comprend l'entrée des données d'image dans un module de contrôle de processus statistique et la comparaison des données d'image avec des limites de contrôle prédéterminées, dans lequel
l'unité de contrôle (38) est configurée pour générer une alerte si les données d'image dépassent les limites de contrôle prédéterminées.

8. Système de fabrication d'additif selon la revendication 7, dans lequel :
les données d'image comprennent au moins l'un d'une forme de panache, d'une hauteur de panache, d'une largeur de panache, d'une surface de panache, d'une orientation de panache et d'une intensité lumineuse.

9. Système de fabrication d'additif selon la revendication 7, dans lequel :
la caméra (52) est une caméra à grande vitesse et haute résolution, configurée en particulier pour saisir les images du panache d'étincelle (60) en temps réel.
